# FASCICULE DE BREVET EUROPEEN

(11) **EP 3 186 213 B1**
(45) Date de publication et mention de la délivrance du brevet: **04.12.2019**
(21) Numéro de dépôt: 14789312.7
(22) Date de dépôt: 25.08.2014
(51) Int. Cl.: C05F 11/00

(54) **UTILISATION D'UN EXTRAIT DE PLANTE POUR FAVORISER LE DÉVELOPPEMENT VÉGÉTAL OU RACINAIRE ET PROCÉDÉ D'ACCÉLÉRATION DU DÉVELOPPEMENT D'UNE PLANTE**
VERWENDUNG EINES EXTRAKTES AUS PFLANZENMATERIAL ZUR FÖRDERUNG DES PFLANZEN- ODER WURZELWACHSTUMS UND VERFAHREN ZUR BESCHLEUNIGUNG DES WACHSTUMS EINER PFLANZE
USE OF AN EXTRACT FROM PLANT MATERIAL FOR PROMOTING PLANT OR ROOT GROWTH AND METHOD FOR SPEEDING UP THE GROWTH OF A PLANT

(43) Date de publication de la demande: 05.07.2017
(73) Titulaire: Martinez-Barbreau, Christelle, 34270 Cazevieille (FR)
(72) Inventeur: Martinez-Barbreau, Christelle, 34270 Cazevieille (FR)
(74) Mandataire: Cornuejols, Georges
(86) Numéro de dépôt international: PCT/FR2014/052123
(87) Numéro de publication internationale: WO 2016/030584

(56) Documents cités:
- WO-A1-2004/017739
- JP-A- 2009 073 772
- MD-B1- 3 866
- KORON DARINKA ET AL: "Effects of non-chemical soil fumigant treatments on root colonisation with arbuscular mycorrhizal fungi and strawberry fruit production", CROP PROTECTION, vol. 55, 12 novembre 2012 (2012-11-12), pages 35-41, XP028792545, ISSN: 0261-2194, DOI: 10.1016/J.CROPRO.2013.09.009
- ANVER S ET AL: "Biological control of soil nematodes associated with linseed", CABA, 1 janvier 2002 (2002-01-01), XP002265110,
- Ekaterini Riga: "The effects of Brassica green manures on plant parasitic and free living nematodes used in combination with reduced rates of synthetic nematicides", Journal of nematology, 1 juin 2011 (2011-06-01), pages 119-121, XP055192623, United States Extrait de l'Internet: URL:http://www.ncbi.nlm.nih.gov/pubmed/227 91922 [extrait le 2015-06-01]
- MITSUO MIYAZAWA ET AL: "Composition of the essential oil from the leaves ofEruca sativa", FLAVOUR AND FRAGRANCE JOURNAL, vol. 17, no. 3, 1 janvier 2002 (2002-01-01), pages 187-190, XP055068049, ISSN: 0882-5734, DOI: 10.1002/ffj.1079
- HELANA NAGUIB MICHAEL ET AL: "Studies on the chemical constituents of fresh leaf of Eruca sativa extract and its biological activity as anticancer agent in vitro", JOURNAL OF MEDICINAL PLANT RESEARCH, ACADEMIC JOURNALS, NG, vol. 5, no. 7, 4 avril 2011 (2011-04-04), pages 1184-1191, XP007922016, ISSN: 1996-0875
- PINGXIANG LU ET AL: "Biofumigation with Brassica plants and its effect on the inoculum potential of Fusarium yellows of Brassica crops", EUROPEAN JOURNAL OF PLANT PATHOLOGY, KLUWER ACADEMIC PUBLISHERS, DO, vol. 126, no. 3, 24 octobre 2009 (2009-10-24), pages 387-402, XP019768448, ISSN: 1573-8469

## Description

### DOMAINE TECHNIQUE DE L'INVENTION

La présente invention concerne un biostimulant, une utilisation d'un extrait obtenu par extraction aqueuse d'au moins une partie de plante de Roquette, par exemple du genre Eruca (Eruca sativa ; Eruca vesicaria, ...), Diplotaxis (Diplotaxis erucoides, Diplotaxis tenuifolia, Diplotaxis muralis ...), Bunias (Bunias erucago, Bunias orientalis, ...) Erucastrum (Erucastrum nasturtiifolium, Erucastrum incanum...) ou Cakile (Cakile maritima...) pour favoriser le développement végétal ou le développement racinaire et un procédé d'accélération du développement d'une plante.

La présente invention s'applique, notamment, à favoriser le développement végétal (augmentation de la biomasse des plantes au sens général, et/ou augmentation de la taille des plantes, et/ou augmentation de la taille des fruits, et/ou du poids des fruits), ainsi que la précocité du développement végétal (précocité de la floraison, et/ou de l'apparition des fruits, et/ou des stages physiologiques en général). La présente invention s'applique à l'agriculture en général, au jardinage, à l'horticulture, à l'arboriculture, etc.

L'utilité du produit issu de l'invention a également été démontrée en conditions de stress pour les plantes (exemple de stress hydrique...).

### ETAT DE LA TECHNIQUE

Depuis la fin de la deuxième guerre mondiale, l'industrie globale des pesticides a été l'un des principaux facteurs intervenant dans la croissance de la productivité de l'agriculture dans le monde.

Depuis le début des années 90, on assiste à une remise en question grandissante de l'utilisation intensive des produits chimiques utilisés en agriculture, tant par le grand public en général que par les communautés scientifiques. Des inquiétudes sérieuses apparaissent alors, concernant les effets à long terme des produits utilisés sur l'environnement : effets sur les espèces animales non-cible, sur les systèmes aquatiques, mais également sur la quantité de résidus dans les produits traités (fruits, légumes) auxquels vont être exposés les consommateurs.

Se pose alors également le problème de l'exposition directe des utilisateurs (agriculteurs) qui vont être en contact directs pendant des années avec les produits agricoles dont les effets toxiques à long terme ne sont pas toujours connus.

On assiste alors, sur les marchés dont l'économie est développée, à une demande croissante de nourriture dite « biologique » de la part des consommateurs.

Parallèlement à cette prise de conscience croissante et à ce changement de certaines pratiques agricoles, les ministères des différents pays européens et même du monde entier entament une politique sérieuse de « réduction des intrants chimiques », avec une vaste campagne d'information et de sensibilisation sur la nécessité de ne plus utiliser les produits chimiques de façon abusive.

Parallèlement, on assiste à un phénomène de « retrait du marché » de certains produits chimiques par les autorités européennes, à cause de leur toxicité reconnue. Il faut noter alors que les molécules retirées ne sont souvent remplacées par aucune autre, laissant certains problèmes phytosanitaires sans réponses...

Un problème très sérieux concerne toute la famille des produits fertilisants, engrais, utilisés, eux aussi de façon abusive dans le but d'accroître, toujours davantage, les niveaux de production... L'utilisation des engrais entraîne alors deux types de conséquences qui peuvent comporter des risques sanitaires (atteinte à la santé de l'homme) ou des risques environnementaux (dégâts sur les écosystèmes). Le risque sanitaire le plus connu est celui relatif à la consommation d'eau riche en nitrate (fertilisation en azote) par le nourrisson.

Le risque environnemental le plus cité est celui de la pollution de l'eau potable ou de l'eutrophisation des eaux, lorsque les engrais, organiques ou minéraux, sont répandus en trop grande quantité par rapport aux besoins des plantes et à la capacité de rétention des sols, et que les éléments solubles sont entraînés vers la nappe phréatique par infiltration, ou vers les cours d'eau par ruissellement.

Plus généralement, les conséquences de l'utilisation intensive des engrais, qui peuvent comporter des risques et qui sont soumises à la critique, sont les suivantes : effets sur la qualité des sols, leur fertilité, leur structure, l'humus et l'activité biologique ; effets sur l'érosion ; effets liés au cycle de l'azote et à la toxicité des nitrates ; effets liés au cycle du phosphore ; effets liés à la présence de métaux lourds (cadmium, arsenic, fluor), eutrophisation des eaux douces et marines ; pollution émise par l'industrie des engrais ...

Les Biostimulants font partie d'une variété de nouveaux produits émergeants dont l'intérêt est de promouvoir une agriculture durable et sans danger. Cette nouvelle famille de produits devrait permettre de réduire l'utilisation d'intrants et d'engrais classiques, et donc de réduire l'impact des traitements agricoles sur l'environnement.

Afin de remplacer l'utilisation intensive des engrais polluants, un Biostimulant, appliqué sur la plante ou dans la rhizosphère, doit avoir un impact positif sur la croissance d'une plante, en permettant : soit une meilleure assimilation des nutriments (en agissant par exemple sur le développement du système racinaire) en favorisant ainsi l'efficacité de la nutrition, soit une meilleure résistance aux stress abiotiques, soit une amélioration de la qualité de la récolte, indépendamment d'une fonction fertilisante. Le métabolisme de la plante doit être stimulé, afin que cette dernière puisse optimiser l'utilisation des ressources à sa portée, plutôt que de lui fournir un apport d'engrais intensif.

Parmi les produits existants sur le marché, plusieurs catégories de Biostimulants sont connues : l'utilisation d'inoculum microbiens (IMs) est une pratique qui connaît un intérêt croissant ces dix dernières années (Hayat, et al. 2010). Ces produits contiennent des microorganismes vivants qui, lorsqu'ils sont appliqués sur les graines, sur les plantes, ou dans le sol au cours de la germination, participent au développement des plants. Les IMs peuvent contenir des microorganismes vivants de type bactérien, fongique, ou champignons mycorhisiens à arbuscules (Arbuscular mycorrhizal fungi, AMF) (Vessey, 2003 ; Adesemoye & Kloepper, 2009 ; Berg, 2009) qui peuvent être isolés du sol, de résidus de plantes (ou de plantes vivantes), dans l'eau, ou encore dans du fumier composté, etc.... Parmi les biostimulants qui ont été longuement étudiés figurent les bactéries du sol (Plant growth-promoting bacteria, PGPB) et les rhizobactérie (Plant growth-promoting rhizobacteria, PGPR) favorisant la croissance des plantes. Toutes ces formes de bactéries ont été isolées de la rhizosphère (Bashan et al., 2014).

On connaît également les substances humiques (SHs). Dans le sol, les SHs peuvent jouer plusieurs fonctions, telles que l'amélioration de la disponibilité en éléments nutritifs. En plus des ces fonctions, les SHs peuvent induire des changements dans la physiologie de la plante et la composition en microorganismes de la rhizosphère (Varanini & Pinton, 2000). L'activité de ces substances dépend fortement de leurs caractéristiques structurales (Berbara & García, 2014).

La stimulation du développement et la tolérance à différents stress biotiques et abiotiques ont été enregistrés chez des plantes après leur traitement avec des produits à base d'hydrolisats de protéines et d'acides aminés libres. Cet effet stimulateur et protecteur ne semble pas être la conséquence d'une meilleure alimentation azotée (Ertani et al., 2009). Les biostimulants à base de protéines peuvent être classés en deux grandes catégories (i) les hydrolysats de protéines (HPs), constitué de peptides ou d'acides aminés d'origine animale ou végétale, et les (ii) acides aminés libres (AALs) tels que le glutamate, glutamine, proline et la glycine.

Les algues marines ont également été longuement utilisées pour améliorer la fertilité des sols et augmenter la productivité des plantes de grandes cultures (Craigie, 2011). Après le développement de procédés techniques d'extraction liquide dans les années cinquante (Milton, 1952), une grande variété de produits d'extraits d'algues (EAs) est commercialisés dans le monde entier et sert d'intrant en agriculture (Craigie, 2011). Au départ, ces extraits ont été décrits comme chélateurs améliorant l'utilisation des éléments minéraux et l'aération du sol (Milton, 1964). De nos jours, les extraits d'algues sont connus pour leurs rôles biostimulants dans l'activation de plusieurs processus tels que la germination, la croissance végétative, la floraison et la réponse aux stress biotiques et abiotiques, ce qui améliore les rendements et le déroulement de le récolte (Norrie & Keathley, 2005 ; Mancuso et al. 2006 ; Hong et al. 2007 ; Rayorath et al. 2008 ; Craigie, 2011 ; Mattner, et al., 2013). Sur le marché, une large proportion d'EAs est fabriquée à partir de d'algues (marines) brunes telles que Ascophyllum nodosum, Fucus, Laminaria, Sargassum et Turbinaria spp. (Hong et al. 2007 ; Sharma et al. 2012). Souvent utilisés à faibles doses (dilué à 1:1000 ou plus) dans l'agriculture, plusieurs scientifiques excluent un effet fertilisant (Khan et al. 2009).

Les extraits d'algues peuvent contenir un large spectre de molécules organiques de minéraux et inclure des complexes polysaccharidiques absents chez les plantes terrestres comme la laminarine, le fucoidan, des alginates et des hormones (Rioux et al. 2007 ; Khan et al. 2009). Les engrais verts à base de plante du genre *Eruca sativa* ont déjà été divulgués notamment par KORON DARINKA ET AL: "Effects of non-chemical soil fumigant treatments on root colonisation with arbuscular mycorrhizal fungi and strawberry fruit production", CROP PROTECTION, vol. 55 , pages 35-41, ISSN: 0261-2194, DOI: 10.1016/J.CROPRO.2013.09.009, par ANVERS ET AL: "Biological control of soil nematodes associated with linseed", CABA ou dans la publication WO 2004/017739 A1.

De plus des extraits végétaux obtenus par extraction de plantes du genre Eruca staiva ont été également étudiés en médecine par HELANA NAGUIB MICHAEL ET AL: "Studies on the chemical constituents of fresh leaf of Eruca sativa extract and its biological activity as anticancer agent in vitro",JOURNAL OF MEDICINAL PLANT RESEARCH, ACADEMIC JOURNALS, NG, vol. 5, no. 7, 4 avril 2011 (2011-04-04), pages 1184-1191, ISSN: 1996-0875.

En revanche, très peu d'extraits végétaux sont connus pour agir en tant que Biostimulant ou stimulateur du développement des plantes, ainsi que de leur système racinaire.

### OBJET DE L'INVENTION

La présente invention vise à trouver une solution efficace pour stimuler la croissance des végétaux et leur développement racinaire, grâce à un extrait végétal à base de plantes du genre Roquette, ne présentant aucun profil toxicologique à risque, respectant l'environnement et toute forme de vie.

A cet effet, selon un premier aspect, la présente invention vise un biostimulant objet de la revendication 1, une utilisation d'un extrait objet de la revendication 9 et un procédé d'accélération du développement d'une plante objet de la revendication 10.

On rappelle ici que la roquette (« *Eruca sativa* ») est une plante annuelle de la famille des Brassicacées (ou Crucifères), à fleurs blanches ou jaunâtres veinées de brun ou de violet, dont les feuilles sont généralement allongées, découpées et dentées, et ont une saveur piquante et poivrée. Selon les régions, on l'appelle aussi rucola, arugula, rouquette ou riquette. La riquette est une forme sauvage de la roquette avec de petites feuilles très goûteuses. D'autres plantes proches, du genre Diplotaxis, portent le nom de roquette. Lorsqu'il est besoin de les différencier, les Diplotaxis sont appelées "roquette sauvage" et les Eruca "roquette domestique". La présente invention ne se limite pas à ces espèces de roquettes et s'étend au-delà des Eruca sativa. La description de la roquette peut également différer en fonction de son origine, et des régions. On note que les noms communs des plants de roquette comportent aussi Rucola et Arugula.

Préférentiellement, la Roquette mise en œuvre par la présente invention est du genre Eruca (Eruca sativa ; Eruca vesicaria, ...), Diplotaxis (Diplotaxis erucoides, Diplotaxis tenuifolia, Diplotaxis muralis ...), Bunias (Bunias erucago, Bunias orientalis, ...) ou Erucastrum (Erucastrum nasturtiifolium, Erucastrum incanum...), ou encore Cakile (Cakile maritima...). Au sens de la présente invention, la Roquette comporte l'ensemble de ces plantes, éventuellement mélangées. Ces plantes de Roquette citées font parties de l'ordre des Capparales et font partie de la famille des Brassicaceae....

On rappelle aussi que l'ingrédient actif, ou la substance active, d'un produit pour favoriser le développement d'une plante est l'ensemble des ingrédients de ce produit qui possèdent un effet favorable sur le développement d'une plante.

Le développement végétal comporte la croissance végétale, y compris racinaire et la précocité de la plante considérée.

La croissance végétale, d'une plante est l'ensemble des changements quantitatifs irréversibles de la plante qui se produisent au cours du temps. La croissance est une donnée qui peut s'exprimer en unité de longueur par unité de temps ou en unité de masse par unité de temps. La croissance comprend notamment l'allongement des entrenœuds et des racines, la multiplication des cellules et/ou leur allongement, ainsi que la croissance des feuilles.

La précocité est le fait pour un organisme vivant d'atteindre son état de maturité plus rapidement que la moyenne de l'espèce dans les mêmes conditions (saisons, paramètres environnementaux, etc...). Sur les plantes, la précocité induite par l'utilisation de broyat objet de la présente invention, peut se mesurer/quantifier en notant l'apparition des différents stades physiologiques (premières feuilles, premières fleurs, premiers fruits, etc...) des plants traités, en comparaison avec les stades physiologiques des plants de la même espèce non traités par l'utilisation de broyat objet de l'invention.

La stimulation du développement racinaire se caractérise par une modification du système racinaire (raccourcissement ou élongation de la racine primaire, raccourcissement ou élongation des racines secondaires, apparition de poils absorbants, etc...). Cette stimulation par l'utilisation de broyat objet de la présente invention peut être mesurée par comparaison du système racinaire des plants traités et non traités.

Une telle composition peut consister en un extrait total brut obtenu par extraction de la plante du genre Roquette, en une fraction enrichie en composé(s) actif(s) d'un tel extrait total, ou en un ou une pluralité de composé(s) actif(s) en mélange. Une telle composition permet avantageusement, lorsqu'elle est présente en quantité efficace, d'accélérer le développement végétal, notamment des salades, légumes et autres plantes destinées à l'alimentation humaine ou animale, ainsi qu'aux plantes ornementales, arbres ou arbustes.

Dans des modes de réalisation, au moins un ingrédient actif est obtenu à partir de feuilles de plantes du genre roquette.

L'inventeur a découvert que les feuilles de plantes du genre roquette contenaient des ingrédients actifs particulièrement efficaces pour favoriser le développement végétal.

Dans des modes de réalisation, au moins un ingrédient actif est obtenu à partir de graines de plantes du genre roquette.

Dans des modes de réalisation, au moins un ingrédient actif est obtenu à partir de fleurs de plantes du genre roquette.

Dans des modes de réalisation, au moins un ingrédient actif est obtenu par broyage d'au moins une partie de plantes du genre roquettes.

Dans les modes de réalisation, l'ingrédient actif est obtenu par extraction aqueuse, extraction de tourteaux ou de pâtes. On rappelle ici que les tourteaux sont les résidus solides obtenus après extraction de l'huile des graines ou des fruits oléagineux.

Dans des modes de réalisation, la composition objet de la présente invention est formulée sous forme de poudre, de granulés, de granulés dispersibles ou de granulés à diffusion lente.

Dans des modes de réalisation, la composition objet de la présente invention est formulée sous forme de liquide.

Selon un deuxième aspect, la présente invention vise une utilisation d'une composition objet de la présente invention pour favoriser le développement végétal ou la stimulation du développement racinaire.

Selon un troisième aspect, la présente invention vise un procédé d'accélération du développement d'une plante, qui comporte l'application sur ladite plante d'une composition objet de la présente invention.

Dans des modes de réalisation, l'application sur la plante se fait par pulvérisation foliaire, arrosage au sol, goutte à goutte, utilisation en cultures hydroponiques, en traitement de semences et/ou enrobage de graines.

Selon un quatrième aspect, la présente invention vise un procédé de production d'une composition qui comporte une étape de broyage d'au moins une partie de plantes du genre roquette pour fournir un broyat et filtrage de parties solide dudit broyat pour obtenir un liquide.

Les avantages, buts et caractéristiques particulières de cette utilisation et de ces procédés étant similaires à ceux de la composition objet de la présente invention, ils ne sont pas rappelés ici.

### BREVE DESCRIPTION DES FIGURES

D'autres avantages, buts et caractéristiques de la présente invention ressortiront de la description qui va suivre faite, dans un but explicatif et nullement limitatif en regard des dessins annexés, dans lesquels :
- la figure 1 représente, sous forme d'un logigramme, des étapes d'un mode de réalisation particulier du procédé de fabrication et d'utilisation broyat objet de la présente invention et
- les figures 2 à 10 représentent, sous forme de graphes, des comparaisons de résultats obtenus avec l'utilisation de broyat objet de la présente invention,
- les figures 11 à 19 représentent, sous forme de photographies, des racines de plantes traitées sans et avec l'utilisation de broyat objet de la présente invention,
- la figure 20 représente, sous forme de diagramme temporel, un déroulement d'essai de l'utilisation et du procédé objets de la présente invention sur du maïs,
- les figures 21 et 22 représentent, sous forme de tableaux, des mesures de différents paramètres écophysiologiques au cours de l'utilisation et du procédé objets de la présente invention et
- les figures 23A à 23F représentent, sous forme de photographies, des racines de plantes traitées avec l'utilisation et le procédé objets de la présente invention.

### DESCRIPTION D'EXEMPLES DE REALISATION DE L'INVENTION

D'une manière générale, la présente invention concerne l'utilisation de broyats d'au moins une partie de plants de « roquette » pour :
- la stimulation du développement racinaire des plantes,
- la stimulation de la croissance végétale,
- la précocité du développement végétal,
- l'augmentation de la production de fleurs, et/ou de graines, et/ou de fruits et/ou
- la résistance des plantes soumises à un stress hydrique.

L'extrait ou broyât, qui sert à fournir le biostimulant objet de la présente invention, peut être utilisé par pulvérisation foliaire ou arrosage au sol.

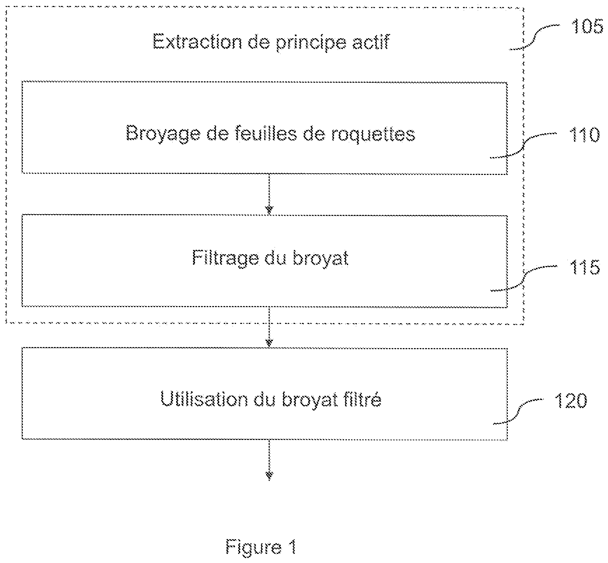

Comme illustré en figure 1, le procédé de fabrication et d'utilisation du broyat objet de la présente invention comporte une étape 105 d'extraction d'un extrait de roquette. Par exemple, cette extraction est réalisée selon la procédure suivante :
- au cours d'une étape de broyage 110, les feuilles de roquette sont broyées finement avec de l'eau courante, pendant quinze minutes, dans un appareil mixeur adapté, de façon à obtenir un broyat homogène ;
- au cours d'une étape de filtrage 115, le broyat est filtré afin de séparer les débris de feuilles et obtenir un liquide de couleur verte sans résidus de feuilles, qui constitue un broyat utilisé comme biostimulant.

Au moins un ingrédient actif du broyat est obtenu par extraction aqueuse.

En variante, au moins un ingrédient actif du broyat est obtenu par extraction de tourteaux ou de pâtes de roquette.

Pour l'utilisation de ce broyat, au cours d'une étape 120, ce broyat liquide est pulvérisé au niveau foliaire sur les plantes à traiter ou utilisé en arrosage du sol.

L'inventeur a, en effet, découvert que l'utilisation de broyat a un effet significatif sur le développement des plantes.

On note que le broyat liquide obtenu à la fin de l'étape 115 peut être formulé pour faciliter son utilisation. Il est, par exemple, utilisé sous forme liquide, de poudre, de granulé, de granulés dispersibles ou de granulés à diffusion lente, en fonction de la formulation choisie et des usages visés. Les formulations sont réalisées à partir du broyat de l'étape d'extraction 105.

Une purification, de quelque manière que ce soit, de fractions actives peut éventuellement avoir lieu pour faciliter la formulation. Différentes étapes d'extractions peuvent être ajoutées pour améliorer sa qualité.

Le broyat peut être dilué dans de l'eau en fonction de la dose nécessaire, au moment de son utilisation.

En ce qui concerne l'utilisation et la formulation du broyat, le produit fini, ou biostimulant qui est formé à partir de ce broyat, peut être appliqué sous quelque forme que ce soit (formulation liquide, poudre, poudre soluble, granulés, granulés dispersibles, granulés à dispersion lente, etc...) selon les usages et la formulation choisie. L'utilisation du broyat objet de la présente invention peut se faire par pulvérisation foliaire, arrosage au sol, goutte à goutte, utilisation en cultures hydroponiques, ou encore en traitement de semences, enrobage de graines, etc ...

Le broyat peut être utilisé à une cadence comprise entre un jour et cent vingt jours, ou en continu, ou selon les stades clefs du développement du végétal, en accord avec les bonnes pratiques agricoles et les calendriers de traitements pour chaque espèce végétale. Le broyat peut être mélangé à d'autres produits (produits phytosanitaires, supports de culture et matière fertilisante, engrais, ou tout autre produit destiné à l'agriculture). Les doses d'application et les cadences d'application sont adaptées aux usages et aux modèles végétaux. Les doses d'application sont, par exemple, comprises entre 0,01 g/L et 12 g/L.

Le broyat peut être utilisé en tant que stimulateur de la croissance racinaire et pour la stimulation du développement végétal. Le broyat, utilisé en arrosage du sol ou en pulvérisation foliaire ou en traitement de semences, ou enrobage des graines, permet d'augmenter le développement racinaire (développement de racines secondaires, production de poils absorbants, etc....) et stimule le développement du végétal (augmentation du nombre de fruits ainsi que de leur taille, précocité de la récolte, augmentation de la croissance foliaire, etc...).

On donne, ci-dessous, des éléments de démonstration de l'efficacité de la composition objet de la présente invention.

Traitements statistiques des données : Une analyse de variance a été réalisée sur les résultats de chaque notation. Pour chaque notation, les analyses ont été réalisées sans le témoin inclus. Lorsque les hypothèses de l'analyse de variance sont respectées, une comparaison de moyenne a été réalisée selon le test de Newman et Keuls au seuil de 5%. Le classement issu de ce test est présenté avec les résultats sous forme de lettres (a, b, c). Les moyennes suivies d'une même lettre ne sont pas différentes, de façon significative.

### 1/ Tomate

Le produit fini issu du broyat roquette (Eruca sativa), appliqué à une cadence de dix jours, permet d'augmenter significativement le nombre de tomates par plants ainsi que le poids total de la récolte. L'utilisation du broyat objet de la présente invention (codé ici « FERTI01 ») est plus efficace que l'utilisation de la référence choisie, Osiryl, marque déposée, stimulateur de la croissance racinaire, homologué en France sous le numéro d'AMM n° 1030003, appelé, ci-dessous, la référence.

Pour la tomate, des modes d'application comportent l'arrosage du sol mettant en oeuvre une formulation liquide. La table 1 représente l'efficacité de l'utilisation de broyat objet de la présente invention sur la tomate, pour un plant témoin, un plant traité avec la référence.

**Table 1: Efficacité sur la tomate (20 plants/modalité)**

| Culture | Notation | Dates | Témoin | Référence | FERTI01 |
|---|---|---|---|---|---|
| Tomate *Lycopersicon esculentums* MILL. | Nombre moyen de tomates par plants sur la durée de la récolte | Récoltes du 02/07/11 au 30/07/11 | 9 a | 11,25 ab | 14,50 b |
| | Poids total de la récolte (kg) par modalité | | 25,65 a | 31,75 ab | 43,80 b |

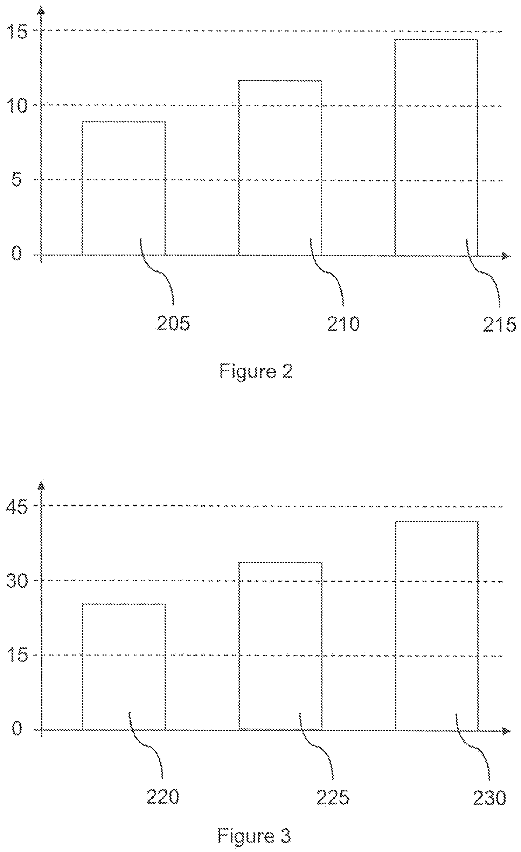

La figure 2 illustre le nombre moyen de tomates par plant, par modalité, issu de la table 1. On y observe le nombre moyen de tomates par plant témoin, 205, le nombre moyen de tomates par plant traité avec la référence, 210 et le nombre moyen de tomates par plant traité avec le produit fini issu du broyat, 215.

La figure 3 illustre le poids total (en Kg) de tomates récoltées par modalité sur la durée de la récolte, issu de la table 1. On y observe le poids total de tomates récoltées dans la modalité des plants témoins, 220, le poids total de tomates récoltées dans la modalité des plants traités avec la référence, 225 et le poids total de tomates récoltées dans la modalité des plants traités avec le produit fini issu du broyat, 230.

Dans les conditions d'expérimentation, l'efficacité de l'utilisation de broyat objet de la présente invention sur la tomate a ainsi été démontrée, en comparaison au produit de référence homologué en France qui est stimulateur de croissance racinaire.

Pour cet essai, sept applications ont été réalisées, à dix jours d'intervalle. Les observations ont été notées sur les tomates récoltées, sur une période de récolte de 28 jours.

Les résultats montrent que le nombre moyen de tomates par plant des parcelles traitées avec l'utilisation de broyat objet de la présente invention (14,50 tomates/plant) est plus élevée comparé au nombre moyen de tomates par plant dans les parcelles non traitées, ou traitées avec la référence (9 et 11,25 tomates/plant, respectivement) (table 1 et figure 2).

Les observations montrent également que le poids total de la récolte des parcelles traitées avec l'utilisation de broyat objet de la présente invention (43,80 kg) est plus élevé comparé au poids total de la récolte dans les parcelles non traitées et traitées avec la référence (25,65 et 31,75 kg, respectivement) (table 1 et figure 3).

Sept applications, à dix jours d'intervalle, du produit fini issu du broyat permettent d'augmenter significativement le nombre de tomates par plants ainsi que le poids total de la récolte des plants de tomates traités.

Enfin, on note que les résultats de cet essai ont été obtenus sur une courte période de récolte (28 jours).

### 2/ Laitue

Le produit fini issu du broyat de roquette (Eruca sativa) (codé ici « FERTI01 »), appliqué à une cadence de dix jours, permet d'augmenter significativement le diamètre des laitues, ainsi que le poids des laitues traitées. L'utilisation de broyat objet de la présente invention est statistiquement plus efficace que l'utilisation de la référence Osiryl citée ci-dessus.

Pour la laitue, les modes d'application du produit fini issu du broyat comportent l'arrosage du sol mettant en œuvre une formulation liquide. La table 2 représente l'efficacité de l'utilisation de broyat objet de la présente invention sur la laitue, pour un plant témoin, un plant traité avec la référence, et la laitue traitée avec l'utilisation de broyat objet de la présente invention.

**Table 2: Efficacité sur la laitue (10 plants/modalité)**

| Culture | Notation | Dates | Témoin | Référence | FERTI01 |
|---|---|---|---|---|---|
| Laitue *Lactuca sativa* | Diamètre moyen des laitues (cm) | A la récolte : 12/03/11 | 20,1 a | 21,2 a | 25,33 b |
| | Poids moyen des laitues (g) | | 280,5 a | 283,1 a | 295,3 b |

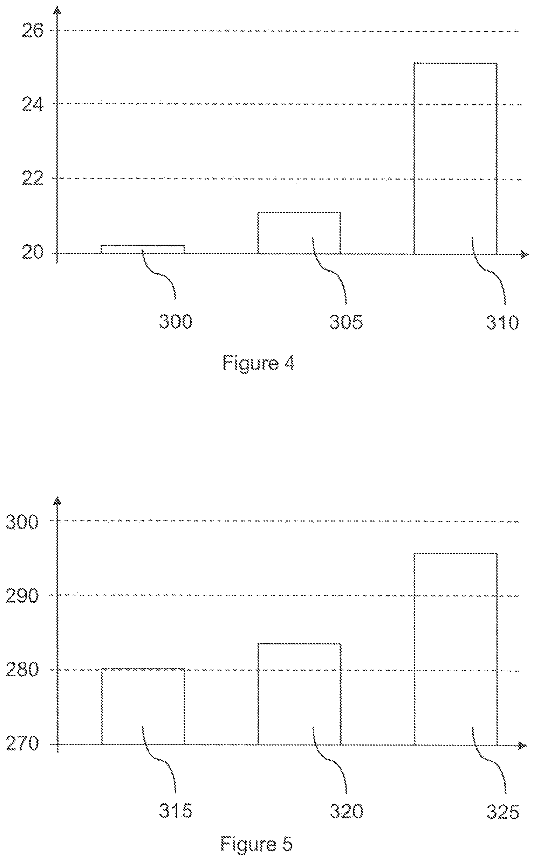

La figure 4 illustre le diamètre moyen des laitues, par modalité, issu de la table 2. On y observe le diamètre moyen des laitues témoin, 300, le diamètre moyen des laitues traitées avec la référence, 305 et le diamètre moyen des laitues traitées avec l'utilisation de broyat objet de la présente invention, 310.

La figure 5 illustre le poids moyen des laitues, par modalité, issu de la table 2. On y observe le poids moyen des laitues témoin, 315, le poids moyen des laitues traitées avec la référence, 320 et le poids moyen des laitues traitées avec l'utilisation de broyat objet de la présente invention, 325.

Pour cet essai, sept applications ont été réalisées à dix jours d'intervalle. Les observations ont été notées sur les laitues récoltées.

Dans les conditions expérimentales, les observations montrent que le poids moyen des laitues est statistiquement plus élevé pour les laitues traitées avec l'utilisation de broyat objet de la présente invention (295,3 g/laitue) que pour les laitues non traitées et traitées avec la référence homologuée en France en tant que stimulateur du développement racinaire (280,5 et 283,10 g/laitue, respectivement) (Table 2 et figure 5).

Sept applications, à dix jours d'intervalle, du broyat permettent d'augmenter le diamètre et le poids des laitues. L'utilisation de broyat objet de la présente invention est statistiquement plus efficace que l'utilisation du produit de référence.

### 3/ Concombre

Le produit fini issu du broyat de roquette (Eruca sativa) (codé ici « FERTI01 »), appliqué à une cadence de dix jours, permet d'augmenter significativement le nombre de concombres par plant ainsi que le poids total de la récolte des plants traités. L'utilisation de broyat objet de la présente invention est statistiquement plus efficace que l'utilisation de la référence décrite ci-dessus.

Pour le concombre, les modes d'application du produit fini issu du broyat comportent l'arrosage du sol mettant en œuvre une formulation liquide.

La table 3 représente l'efficacité de l'utilisation de broyat objet de la présente invention sur le concombre, pour un plant témoin, un plant traité avec la référence homologuée en France, et un plant traité avec le broyat.

**Table 3: Efficacité sur concombre (20 plants par modalité)**

| Culture | Notation | Dates | Témoin | Référence | FERTI01 |
|---|---|---|---|---|---|
| Concombre *Cucumis sativus* L. (CUMSA) | Nombre moyen de concombres récoltés par plants | Récoltes du 11/06/11 au 30/07/11 | 4,10 a | 7,20 b | 10,12 c |
| | Poids total de la récolte (kg) | | 10,25 a | 22,22 b | 29,15 c |

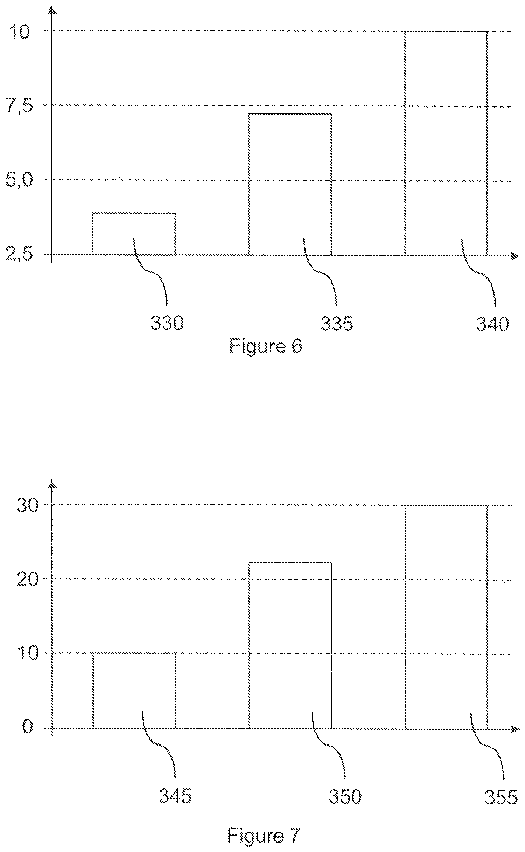

La figure 6 illustre le nombre moyen de concombres par plant, par modalité, issu de la table 3. On y observe le nombre moyen de concombres par plant témoin, 330, le nombre moyen de concombres par plant traité avec la référence, 335 et le nombre moyen de concombres par plant traité avec l'utilisation de broyat objet de la présente invention, 340.

La figure 7 illustre le poids total (en kg) des concombres par plant, par modalité, issu de la table 3. On y observe le poids total de concombres par plant témoin, 345, le poids total de concombres par plant traité avec la référence, 350 et le poids total de concombres par plant traité avec l'utilisation de broyat objet de la présente invention, 355.

Pour cet essai, huit applications ont été réalisées à dix jours d'intervalle. Les observations ont été notées sur les concombres récoltés, sur une période de récolte de 40 jours.

Les résultats montrent que le nombre moyen de concombres par plant durant le temps de la récolte dans les parcelles traitées avec l'utilisation de broyat objet de la présente invention (10,12 concombres/plant) est statistiquement plus élevé comparé aux parcelles non traitées et traitées avec le produit de référence homologué en France (4,10 et 7,20 concombres/plant, respectivement) (Table 3 et figure 6).

Les observations montrent également que le poids total des concombres récoltés des parcelles traitées avec l'utilisation de broyat objet de la présente invention (29,15 kg) est statistiquement plus lourd comparé aux parcelles non traitées et traitées avec la référence (10,25 et 22,22 kg, respectivement) (Table 3 et figure 7).

Huit applications, à dix jours d'intervalle, du produit fini issu du broyat permettent d'augmenter significativement le nombre de concombres par plants ainsi que le poids total de la récolte des plants traités. De plus, l'utilisation de broyat objet de la présente invention est statistiquement plus efficace que l'utilisation de la référence.

### 4/ Concombre

Le produit fini issu du broyat de roquette (Eruca sativa) (codé ici « FERTI01 »), appliqué à une cadence de dix jours, permet d'augmenter significativement le poids total de la récolte des plants traités. L'utilisation de broyat objet de la présente invention est statistiquement plus efficace que l'utilisation de la référence citée ci-dessus.

L'utilisation de broyat objet de la présente invention permet aussi d'augmenter significativement le nombre de fleurs fertiles. De plus, l'utilisation de broyat objet de la présente invention est statistiquement plus efficace que l'utilisation de la référence citée ci-dessus.

Pour le concombre, les modes d'application du produit fini issu du broyat comportent l'arrosage du sol mettant en œuvre une formulation liquide.

La table 4 représente, dans les conditions d'expérimentation, l'efficacité de l'utilisation de broyat objet de la présente invention sur le concombre, pour un plant témoin, un plant traité avec la référence et un plant traité avec l'utilisation de broyat objet de la présente invention.

**Table 4: Efficacité sur concombre (10 plants/modalité)**

| Culture | Notation | Dates | Témoin | Référence | FERTI01 |
|---|---|---|---|---|---|
| Concombre *Cucumis sativus* | Nombre moyen de fleurs fertiles par plants | Avant récolte du 15/09/ au 07/10 | 12,25 a | 10,10 a | 16,12 b |
| | Nombre moyen de concombres récoltés par plants | Aux récoltes du 08/10 au 31/10 | 3,5 a | 5,1ab | 8,5 b |
| | Poids total de la récolte sur la période (kg) | Aux récoltes du 08/10 au 31/10 | 3,9 a | 6,1 a | 10,2 b |

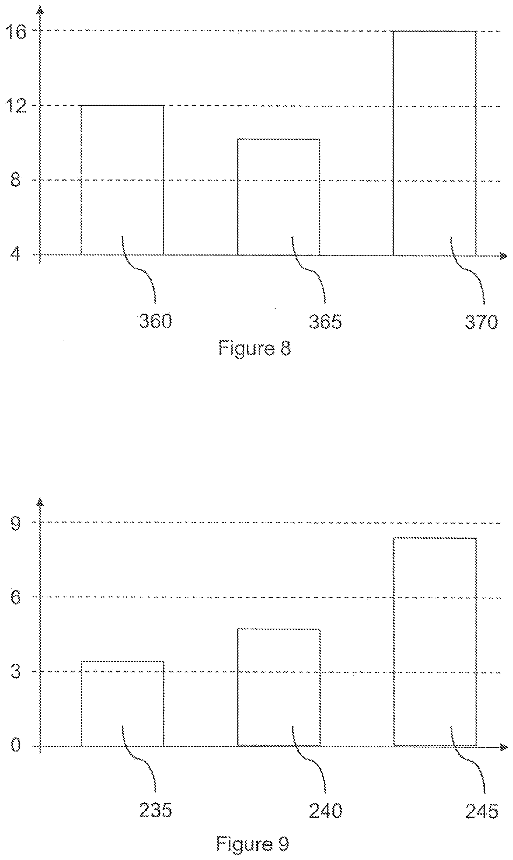

La figure 8 illustre le nombre moyen de fleurs fertiles par plant, par modalité, issu de la table 4. On y observe le nombre moyen de fleurs fertiles par plant témoin, 360, le nombre moyen de fleurs fertiles par plant traité avec la référence, 365 et le nombre moyen de fleurs fertiles par plant traité avec l'utilisation de broyat objet de la présente invention, 370.

La figure 9 illustre le nombre moyen de concombres récoltés par plant, par modalité, issu de la table 4. On y observe le nombre moyen de concombres récoltés par plant témoin, 235, le nombre moyen de concombres récoltés par plant traité avec la référence, 240 et le nombre moyen de concombres récoltés par plant traité avec l'utilisation de broyat objet de la présente invention, 245.

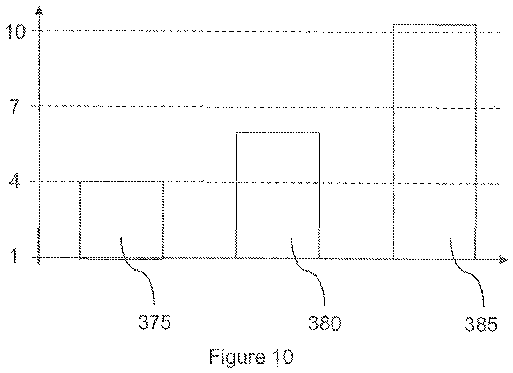

La figure 10 illustre le poids total des concombres récoltés sur la période, par modalité, issu de la table 4. On y observe le poids total de concombres dans la modalité des plants témoins, 375, le poids total de concombres dans la modalité des plants traités avec la référence, 380 et le poids total de concombres dans la modalité des plants traités avec l'utilisation de broyat objet de la présente invention, 385.

Pour cet essai, quatre applications des produits testées ont été réalisées à dix jours d'intervalle. Les observations ont été notées sur les concombres récoltés, sur une période de récolte de 23 jours.

Les résultats montrent que le nombre moyen de fleurs fertiles par plant des parcelles traitées avec l'utilisation de broyat objet de la présente invention (16,12 fleurs/plant) est statistiquement plus élevé comparé aux parcelles non traitées et traitées avec la référence (12,25 et 10,10 fleurs/plant, respectivement) (Table 4 et figure 8).

Les observations montrent également que le poids total de la récolte des parcelles traitées avec l'utilisation de broyat objet de la présente invention (10,2 kg) est statistiquement plus élevé comparé aux parcelles non traitées et traitées avec la référence (3,9 et 6,1 kg, respectivement) (Table 4 et figure 10).

Quatre applications, à dix jours d'intervalle, du produit fini issu du broyat permettent d'augmenter significativement le nombre de fleurs fertiles par plants ainsi que le poids total de la récolte des plants de concombre traités. De plus, l'utilisation de broyat objet de la présente invention est statistiquement plus efficace que l'utilisation de la référence.

Il est à noter que les résultats de cet essai ont été obtenus sur une courte période de récolte (23 jours).

Une étude *in vitro* sur concombre a été conduite en laboratoire dans le but de soutenir l'hypothèse que le broyat pourrait être classé dans la catégorie des stimulateurs de croissance racinaire. Dans cette étude, l'utilisation de broyat objet de la présente invention a été comparée à l'utilisation du produit de référence Osiryl, marque déposée, stimulateur de la croissance racinaire, homologué en France sous le numéro d'AMM n° 1030003.

Les produits testés ont été inclus au milieu de culture de Murashige et Skoog (0,5X) au début de l'étude. Les graines de concombre ont été stérilisées avec une solution d'eau de Javel, puis lavées trois fois à l'eau. Les graines stérilisées ont été disposées sur le milieu de culture et les boîtes de pétri ont été placées dans une salle de croissance de culture in vitro pendant 15 jours.

Les observations ont été réalisées sept jours et quatorze jours après l'ensemencement. Les résultats obtenus sont présentés ci-dessous.

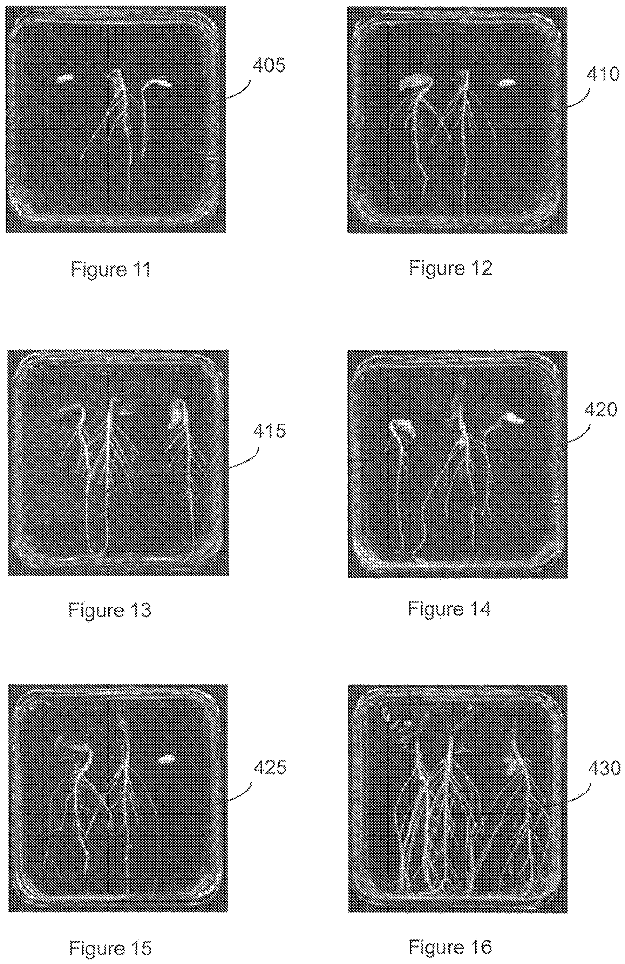

Figures 11, 12 et 13 : photos d'une observation des produits testés en culture *in vitro* sur concombre sept jours après l'ensemencement. La figure 11 représente le témoin 405, la figure 12, la plante traitée avec la référence, 410, et la figure 13 la plante traitée avec l'utilisation de broyat objet de la présente invention, 415.

Figures 14, 15 et 16 : photos d'une observation des produits testés en culture *in vitro* sur concombre quatorze jours après l'ensemencement. La figure 14 représente le témoin 420, la figure 15, la plante traitée avec la référence, 425, et la figure 16 la plante traitée avec l'utilisation de broyat objet de la présente invention, 430.

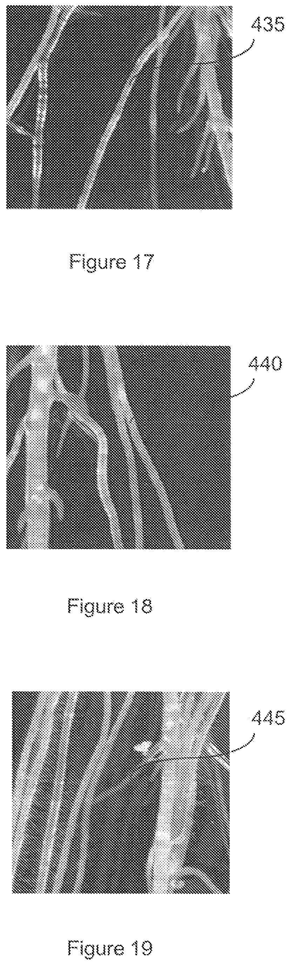

Figures 17, 18 et 19 : photos d'une observation des produits testés en culture *in vitro* sur concombre quatorze jours après l'ensemencement. La figure 17 représente le témoin 435, la figure 18, la plante traitée avec la référence, 440, et la figure 19 la plante traitée avec l'utilisation de broyat objet de la présente invention, 445.

L'étude in vitro sur concombre a été réalisée en France, pour tester le produit fini issu du broyat en comparaison au produit de référence Osiryl.

Les observations permettent de montrer que le système racinaire est plus développé quand le produit fini issu du broyat est inclus au milieu de culture, comparé au témoin et à la référence. En effet, le nombre et la taille des racines latérales et des racines secondaires sont plus élevés avec l'utilisation de broyat objet de la présente invention que pour le témoin et avec l'utilisation de la référence (figures 11 à 16).

De plus, 14 jours après l'ensemencement, des poils absorbants sont uniquement observés sur les boites de pétri contenant le produit fini issu du broyat (figures 17 à 19).

Les observations de cette étude in vitro montrent que les graines de concombre ayant germé sur un milieu de culture sur lequel le produit fini issu du broyat a été ajouté, présentent un système racinaire beaucoup plus développé que les graines ayant germé sur le milieu « témoin ».

### 5/ Blé tendre d'hiver

Dans cet essai préliminaire expérimental en plein champs, Le produit fini issu du broyat de roquette (Eruca sativa) codé ici « FERTI01 », appliqué lors de stades physiologiques clefs sur le blé tendre d'hiver (épi 1 cm, 2 nœuds, GFT/éclat, sortie étamines), permet d'augmenter significativement le poids total de la récolte des plants traités par rapport aux parcelles non traitées (témoin conventionnel)..

La table 5 représente l'efficacité de l'utilisation de broyat objet de la présente invention sur la récolte du blé et sur la teneur en protéines de la récolte, pour une parcelle de plants témoins conventionnels non traités, et une parcelle de plants traités avec la présente invention.

**Table 5: Efficacité sur blé tendre d'hiver**

| Culture | Notations Rendement | Dates | Témoin | FERTI01 |
|---|---|---|---|---|
| Blé tendre d'hiver | Qx/Ha | Juillet 2010 | 74,9 a | 78,8 b |
| | Protéines | | 10,8 a | 11,3 b |

Les observations générales sont :
a/ Aucune phytotoxicité observée notamment pas de brûlé de feuille comme cela est fréquemment observé avec l'utilisation des triazoles.
b/ Observation de stades un peu plus précoces de un à deux jours notamment sur l'épiaison,
c/ La différence du poids de la récolte a été significativement supérieure (quatre quintaux supplémentaires de graines par hectare) pour la modalité traitée par l'utilisation de broyat objet de la présente invention.
d/ le taux de protéines, critère déterminant sur le marché du blé à pain par exemple, est également significativement supérieur dans la récolte issue des parcelles traitées avec l'utilisation de broyat objet de la présente invention.

Les conditions expérimentales de cet essai préliminaire seront améliorées afin d'optimiser les effets de l'utilisation de broyat objet de la présente invention.

Pour le blé les modes d'application du produit fini issu du broyat comportent la pulvérisation foliaire mettant en œuvre une formulation liquide.

### 6/ Maïs

Un essai sur maïs a été réalisé sur jeunes plants, en salle de culture, sur une période de 52 jours (du semis à la dernière notation).

On décrit, ci-après, des essais concernant l'utilisation du produit fini issu du broyat de roquette (Eruca sativa), et le procédé objet de la présente invention.

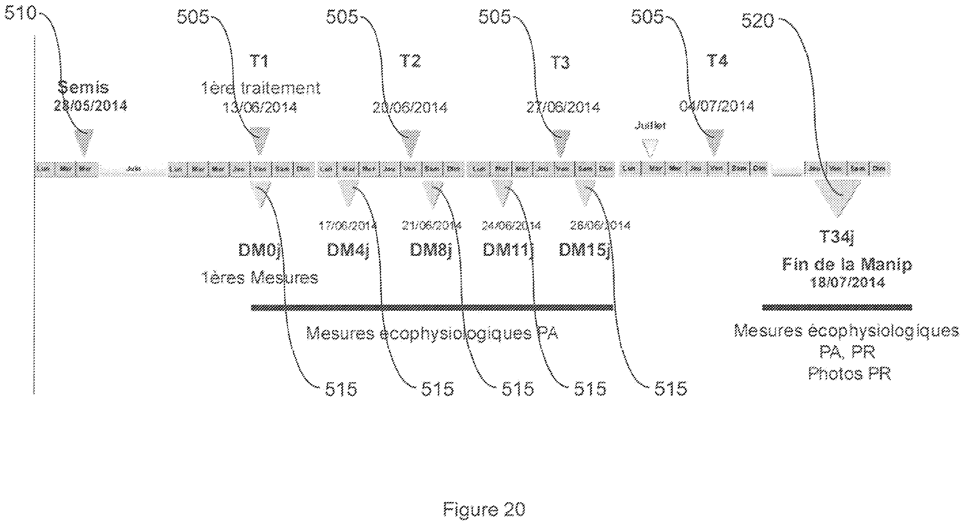

La figure 20 représentant le déroulement de l'essai du broyat sur le maïs. Quatre traitements hebdomadaires (triangles 505), par pulvérisation ou par arrosage, ont été réalisés sur des plantules à partir du stade trois feuilles 15 jours après le semi (triangle 510). Le premier traitement coïncide avec DM0J, date des premières mesures écophysiologiques (triangles 515) 13 juin. Les quatre premières mesures (DM0J, DM4J, DM11J, DM15J) intéressent la partie aérienne. La fin de l'essai (DM34J, triangle 520) a permis de faire également des mesures physiologiques sur la partie racinaire (PR).

Le matériel végétal et les conditions de culture du maïs sont présentés ci-après.

Le sable de granulométrie 0,2 à 5 mm (Sable pour filtration, Castorama, marque déposée) a été rincé quatre fois avec de l'eau distillée puis séché une nuit dans l'étuve à 105°C. Environ 100 g de sable séché ont été utilisés pour remplir plus de 60 petits gobelets en plastique polypropylène (30cl), puis ont été imbibés de 40 ml d'une solution nutritive préparée selon le protocole du fabricant (GHE engrais). Dans chacun des gobelets, une graine de maïs a été mise à germer à un cm de la surface. Les gobelets sont ensuite placés dans la chambre de culture en conditions contrôlées, avec une photopériode de 16 heures, une PPFD (acronyme de « photosynthetic photon flux density » ou densité de flux de photons photosynthétiques) environ égale à 250 µmol.m-2.s-1, un degré d'hygrométrie de 75% ± 5% et une température de 24°C ± 2°C jour et 0°C ± 2°C de nuit.

Au bout de dix jours, atteignant le stade trois feuilles, les jeunes plantules sont transférées dans des pots en plastique de deux litres remplis de sable. Après trois jours d'acclimatation, les pots ont été repartis de manière homogène en trois groupes de 20 plants pour le début des traitements.

Quinze jours séparent la semi et le premier traitement. A la fin de cette période, les 60 plants de maïs obtenus ont été repartis sur trois modalités ; une modalité témoin (C) et deux types de traitement par le biostimulant issu du broyat, par arrosage (A) et par pulvérisation (P).

Un extrait aqueux fournis au départ par l'inventeur est dilué huit fois. Cent millilitres de cette dilution a été appliquée sur les plants de maïs, en l'ajoutant directement dans le pot pour la modalité A ou en les pulvérisant sur les plants pour la modalité P. Pour la modalité C, une quantité de 100 ml d'eau a été versée dans les pots.

Le premier traitement a été réalisé le 13 juin 2014. Trois autres traitements ont été programmés de manière hebdomadaire (Figure 20).

Au cours des traitements, des mesures liées à la croissance végétative et racinaire ont été réalisées sur les plants de chacune des modalités A, P et C. Au total quatre dates de mesures ont été entrepris, le jour du premier traitement (DM0J), 4 (DM4J), 8 (DM8J), 11 (DM11J), 16 (DM16J) et 34 (DM34J) jours après (Figure 20). Nous avons mesurés l'ensemble des paramètres physiologiques suivants :
A/ Taille Moyenne des plants :
   La taille du plant correspond à la distance qui sépare la base du coléoptile et l'extrémité de la feuille la plus développée du plant. Une moyenne est calculée pour les 20 plants de chaque modalité.
B/ Vitesse Moyenne de croissance :
   La vitesse moyenne de croissance a été calculée à partir DM4J. Elle correspond à la différence de taille entre deux dates adjacentes de mesure, sur le nombre de jours qui les séparent. Une moyenne journalière pour chaque modalité est ensuite calculée.
C/ Nombre moyen de feuilles :
   Un comptage manuel du nombre total de feuille a été effectué à DM34J.
D/ Diamètre moyen de la tige :
   Cette mesure est la moyenne des diamètres de tige correspondant aux 20 plants de chaque modalité (A, P, ou C). Les mesures ont commencé à DM11J, date à laquelle la tige a été assez épaisse pour entreprendre la mesure. Le diamètre a été mesuré au moyen d'un pied à coulisse.
E/ Mesure du poids moyen de la partie aérienne et du nombre de feuilles:
   Ces mesures ont été réalisées à la fin de l'essai (DM34j) sur des plantes âgées de 44 jours. La partie aérienne est dissociée des racines puis pesée avec la balance. Le poids moyen est calculé sur les 20 plants de chaque modalité. Le nombre de feuille est compté manuellement.
F/ Mesure du poids moyen du système racinaire
   Tout d'abord les racines ont été retirées du pot puis rincées à l'eau. Le poids frais de la partie racinaire est mesuré avec une balance de précision. Une moyenne sur les 20 plants est calculée pour tous ces paramètres.
G/ Les index moyens de chlorophylle et de flavonols :
   Les index de chlorophylle et de flavonols sont relevés automatiquement à l'aide d'une pince à feuille portable, dualex (Cerovic, Masdoumier et al. 2012). L'appareil est équipé d'un capteur de lumière infrarouge portable qui permet de réaliser en temps réel des mesures non destructives de la chlorophylle et des flavonols de l'épiderme foliaire suite à leur excitation. A DM0J, la feuille n°3 partant de la base du coléoptle était assez développée pour entreprendre ces mesures. Pour assurer une lecture uniforme, la pince est placée à deux cm à partir de la pointe de la feuille. Les valeurs sont exprimées en unité Dualex. A DM34J, suite à la sénescence de la plus grande partie de ces troisièmes feuilles, la mesure n'a pas eu lieu.

Tous les tests statistiques présentés ont été réalisés sur le programme R (Pinheiro, Bates et al. 2011). Pour calculer les différences statistiques entre les échantillons, un test Tukey a été réalisé pour comparer deux à deux les moyennes de chacune des modalités. Le rangement suivant différentes lettres a été effectué manuellement.

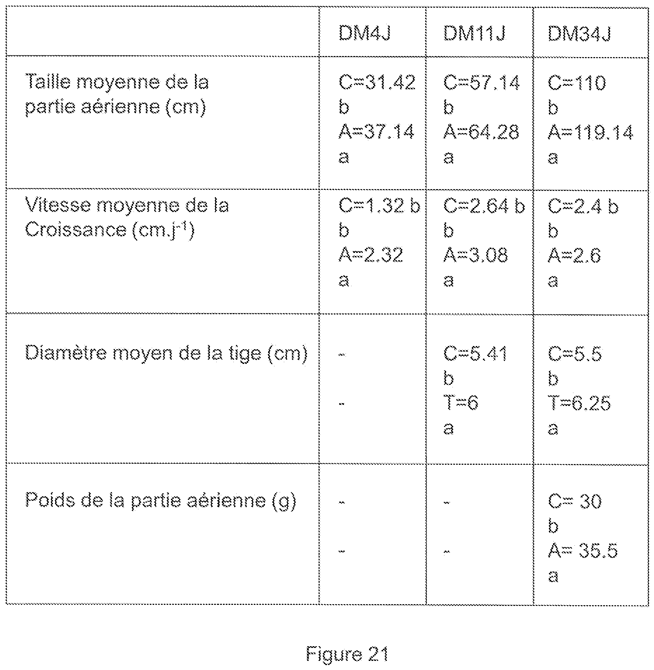

La table représentée en figure 21 représente les mesures de différents paramètres écophysiologiques au cours des traitements par l'utilisation et le procédé objets de la présente invention.

Pour chacune des dates de mesures (DM4J, DM11J, DM34J), les résultats représentent les moyennes de valeurs relevées sur 20 individus (n=20), suite aux traitements des plants de maïs avec le produit fini issu du broyat par arrosage (A), comparés aux plants témoin (C). Les moyennes sont marquées par une lettre différente lorsqu'elles sont statistiquement différentes à P<0,05.

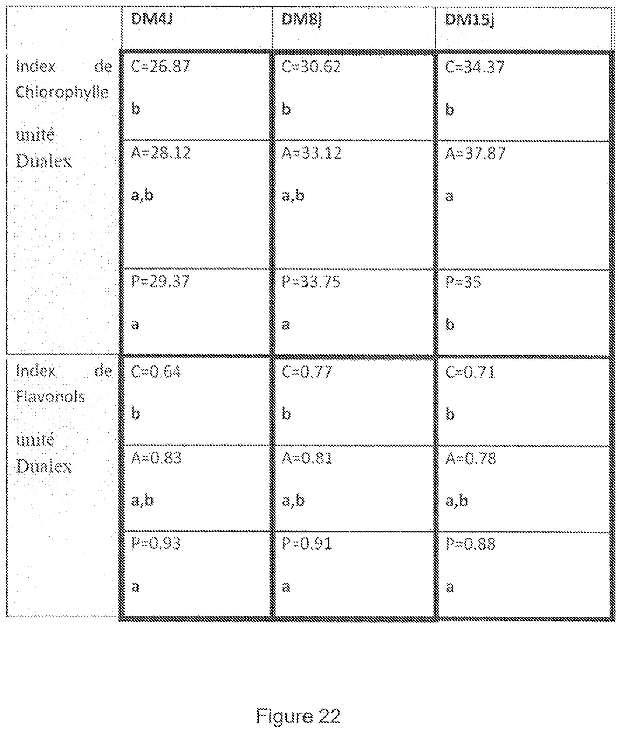

La table représentée en figure 22 représente des mesures de différents paramètres écophysiologiques (Index Chlorophylle et index Flavonols) au cours des traitements par utilisation du produit fini issu du broyat. Pour chacune des dates de mesures (DM4J, DM8J, DM15J), les résultats représentent les moyennes de valeurs relevées sur 20 plantes (n=20), suite aux traitements des plants de maïs avec le produit fini issu du broyat par arrosage (A), par pulvérisation (P) comparés aux plants témoins (C). Les moyennes sont marquées par une lettre différente lorsqu'elles sont statistiquement différentes à P<0,05.

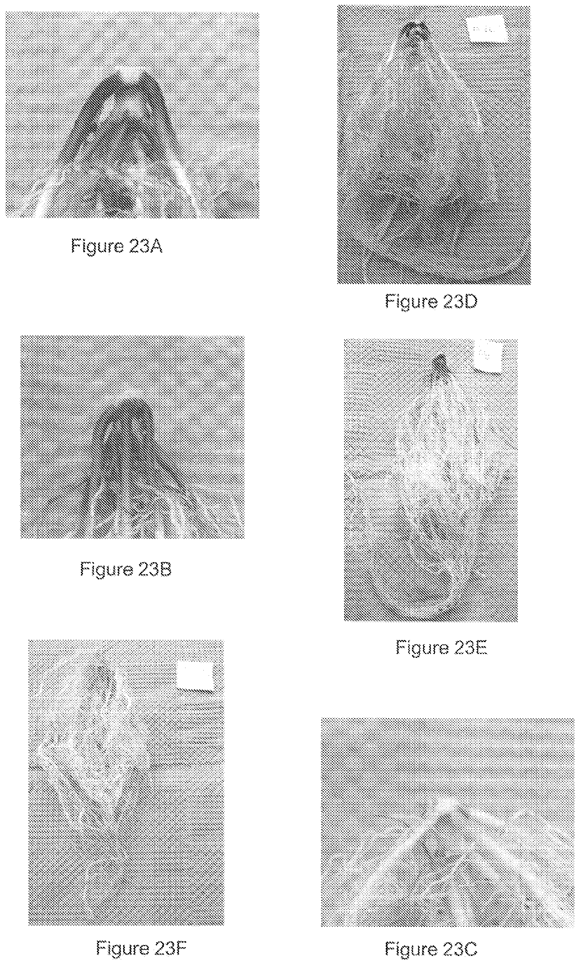

Les figures 23A à 23F illustrent la stimulation du développement racinaire sous l'effet du produit fini issu du broyat. Les photos comparent les systèmes racinaires de la modalité contrôle (Figures 23C et 23F) avec les modalités traitement par arrosage (Figures 23A et 23D) et les modalités par pulvérisations (Figures 23B et 23E).

La Table 6 ci-dessous exprime l'effet stimulant du traitement par l'utilisation et le procédé objets de la présente invention sur le poids moyen de la partie racinaire des plants de maïs. Les résultats représentent les moyennes sur 20 plantes (n=20) des modalités traitement par arrosage (A) et par pulvérisation (P) comparés à la modalité témoins (C). Les valeurs sont marquées par une lettre différente si elles sont statistiquement différents à P<0,05.

**Table 6**

| | C | A | P |
|---|---|---|---|
| Poids moyen du système racinaire (g) | 13,6 | 17,3 | 15,7 |
| | a | b | b |

Le suivi des paramètres écophysiologiques (Figure 21) liés à la croissance végétative nous a permis d'apprécier des changements immédiats survenus suite à l'application du produit fini issu du broyat. Quatre jours seulement après le premier traitement (DM4J), nous avons remarqué que l'application du produit fini issu du broyat par arrosage (A) provoque une augmentation significative de la taille des plants. Tous le long de l'essai, les plants de la modalité A gardent une taille significativement supérieure à celle de la modalité témoin (C).

Les valeurs de la vitesse moyenne de croissance de la modalité A restent significativement supérieures à celles des témoins, et cela pour toutes les dates de mesures.

Comme pour la taille moyenne, les valeurs enregistrées pour le diamètre moyen des plants correspondant à la modalité A sont significativement supérieures aux valeurs de la modalité C.

A la fin des traitements, les mesure des biomasses aérienne montrent une avance significative de la modalité A par apport au Témoin.

Les index de chlorophylle et de flavonols (Figure 22) montrent une évolution positive tout le long de l'essai.

Comme pour les paramètres de la croissance végétative, ces deux index enregistrent une augmentation de valeurs pour les 2 modalités A et P, avec une différence significative pour la modalité P, dès le 4ème jour après le traitement. Jusqu'à DM8J, c'est-à-dire un jour après le deuxième traitement, l'index de chlorophylle et des flavonols est resté en faveur des plants de la modalité P, avec une augmentation significative comparée aux plants témoins. Au temps DM15J, l'index Chlorophylle montre une différence significative pour la modalité A, en comparaison avec les valeurs relevée pour la modalité témoin. Au même temps, l'index Flavonol fournit des valeurs qui continuent de montrer une différence significative pour la modalité P. D'une façon générale, les deux index montrent une évolution positive au cours du temps pour les modalités A et P, même si les différences ne sont pas significatives pour chaque relevé.

L'inspection visuelle du système racinaire (Figure 23A à 23F) nous a permis d'apercevoir des changements très clairs au niveau du phénotype racinaire entre différentes modalités. En effet, la première constatation est la couleur rouge-violet très prononcé et étendu de la région à la base du mésocotyle pour les modalités traitées avec le produit fini issu du broyat pour les modalités A (Figures 23A et 23D) et P (Figures 23B et 23E). La deuxième constatation, concerne les systèmes racinaires des modalités A et P, qui paraissent à vue d'oeil, plus développés qui celui des plants témoins, ce qui a été confirmé par la pesée du système racinaire (Table 6).

Selon les résultats obtenus, il apparaît de façon très évidente que les deux types de traitements par arrosage et par pulvérisation provoquent une augmentation des paramètres de la croissance végétative chez le maïs. Cette amélioration survenue de manière très précoce après le premier traitement, c'est-à-dire au bout de quatre jours, montre un avantage significatif pour les plants traités par le produit issu de l'invention, qui est maintenu tout le long de l'essai.

Un paramètre important qui se retrouve indéniablement plus développé, chez les plantes arrosée avec le produit fini issu du broyat, est le système racinaire. En plus de son rôle d'encrage, le système racinaire joue un rôle important dans l'absorbation des nutriments présents dans le sol. Des corrélations entre le développement du volume racinaire, par la suite à des traitements biostimulants, et une meilleure utilisation des micro et macroéléments du sol a été décrite dans plusieurs études (Vessey, 2003 ; Fan et al. 2006 ; Canellas et al. 2011 ; Khan et al. 2013). Les améliorations constatées sur le développement des plants traités avec le produit fini issu du broyat de Roquette peuvent être donc une conséquence indirecte de l'augmentation du volume racinaire qui améliore l'efficacité de l'utilisation des ressources au sol. La couleur rouge-violet très prononcée au niveau de la base du mésophile racinaire chez les plantes traitées par l'utilisation de broyat est certainement due à l'accumulation présumée de composées phénoliques. L'accumulation de ces composées, pour l'instant de nature inconnue, peut donner une idée préliminaire sur l'un, parmi plusieurs, des effets physiologiques du produit fini issu du broyat sur la plante.

En effet, l'accumulation de composés phénoliques dans les organes végétaux est souvent une réponse réactive aux stimuli environnementaux, permettant ici de visualiser une réaction métabolique concrète des plantes de maïs suite au traitement par le produit objet de ce brevet.

Dans l'expérience décrite ci-dessous, des plants de maïs âgés de 20 jours ont été traités par différents broyats de roquette. Un groupe de plants a été traité dans des conditions normales, alors qu'un autre groupe de plants a été soumis à un stress hydrique pendant tout leur développement. Les plants ont subi deux traitements par pulvérisation avec les produits finis issus du broyat de trois plantes du genre Roquette (Eruca sativa, Diplotaxis erucoides et Bunias erucago) à une cadence de dix jours. Les plants témoins dans les deux conditions ont subis le même traitement avec de l'eau.

Les mesures suivantes ont été réalisées : Mesures du poids moyen de la partie aérienne des plants de maïs dans les différentes conditions, soumis à un stress hydrique ou non, et traités avec les produits finis issus des broyats.

Dans la table 7, pour chacune des mesures (t=20 jours), les résultats représentent les moyennes de valeurs relevées sur 14 individus par modalité (*n*=14), suite au traitement des plants de maïs avec les produits finis issus du broyat par arrosage (A), par pulvérisation (P) comparés aux plants témoin (C). Les moyennes sont marquées par une lettre différente lorsqu'elles sont statistiquement différentes à *P*<0,05.

**Table 7**

| CONDITIONS NORMALES | C | P | A |
|---|---|---|---|
| Poids moyen (g) de la partie aérienne de plants de maïs après traitement avec *Eruca sativa* | 19.3 | 23.9 | 24.8 |
| | b | a | a |
| Poids moyen (g) de la partie aérienne de plants de maïs après traitement avec *Diplotaxis erucoides* | 17.2 | 25.2 | 24.6 |
| | b | a | a |
| Poids moyen (g) de la partie aérienne de plants de maïs après traitement avec *Bunias erucago* | 18.5 | 23.5 | 23.8 |
| | b | a | a |

| STRESS | C | P | A |
|---|---|---|---|
| HYDRIQUE | | | |
| Poids moyen (g) de la partie aérienne de plants de maïs après traitement avec *Eruca sativa* | 3.8 | 10.6 | 10.8 |
| | b | a | a |
| Poids moyen (g) de la partie aérienne de plants de maïs après traitement avec *Diplotaxis erucoides* | 2.5 | 9.5 | 8.5 |
| | b | a | a |
| Poids moyen (g) de la partie aérienne de plants de maïs après traitement avec *Bunias erucago* | 3.2 | 10.2 | 9.8 |
| | b | a | a |

Dans les conditions dites normales d'expérimentations (conditions optimales de culture), les trois broyats issus des trois genres de Roquette (Eruca sativa, Diplotaxis erucoides et Bunias erucago) permettent aux plants de maïs un meilleur développement foliaire, de façon significative, quel que soit le traitement, par arrosage du sol, ou par pulvérisation foliaire. Dans les conditions de stress hydrique, comme on l'observe, le poids moyen de la partie aérienne est très faible, compte tenu de la forte déshydratation des plants (nombreuses feuilles sèches). Toutefois, les plants traités présentent une vigueur et un taux d'hydratation significativement supérieurs aux plants témoins, quels que soit les genres de Roquette utilisés.

L'application du produit décrit ci-dessus montre un effet positif sur la tolérance au manque d'eau et de nutriments. Pulvérisées sur les plantes, les deux types d'application améliorent l'aspect de la plante et leur richesse en eau. Cette propriété pourrait être le résultat d'une amélioration de la biomasse racinaire (Marulanda et al. 2009 ; Anjum et al. 2011), la libération dans le sol de phytohormones comme l'ABA ou les Cks (Zhang & Ervin 2004 ; Arkhipova et al. 2007 ; Cohen et al. 2008 ; Marulanda et al. 2009) ou la dégradation de l'éthylène (Arshad et al. 2008).

La liste des essais, donnée à titre d'exemples, n'est pas exhaustive, et ne représente en rien une limite à l'utilisation du broyat objet de la présente invention. Ce broyat peut être efficace sur de nombreux autres modèles végétaux non décrits ci-dessus.

Démonstration de l'efficacité in vitro : l'utilisation du broyat objet de la présente invention stimule la croissance des poils absorbants, et le développement racinaire. Les effets sur le développement végétal observés sont supérieurs aux effets observés lors des traitements réalisés avec la référence décrite ci-dessus.

La présente invention s'applique, notamment à la biostimulation de l'une des plantes suivantes :
- tomate,
- laitue,
- concombre,
- blé,
- blé tendre,
- maïs ou
- céréale au sens large.

### LISTE DES REFERENCES BIBLIOGRAPHIQUES

Adesemoye, A. O. and J. W. Kloepper (2009). "Plant-microbes interactions in enhanced fertilizer-use efficiency." Applied Microbiology and Biotechnology 85(1): 1-12.
Anjum, S. A., et al. (2011). "Fulvic Acid Application Improves the Maize Performance under Well - watered and Drought Conditions." Journal of Agronomy and Crop Science 197(6): 409-417.
Arkhipova, T. N., et al. (2007). "Cytokinin producing bacteria enhance plant growth in drying soil." Plant and Soil 292(1-2): 305-315.
Arshad, M., et al. (2008). "Inoculation with Pseudomonas spp. Containing ACC-Deaminase Partially Eliminates the Effects of Drought Stress on Growth, Yield, and Ripening of Pea (Pisum sativum L.)." Pedosphere 18(5): 611-620.
Bashan, Y., et al. (2014). "Advances in plant growth-promoting bacterial inoculant technology: formulations and practical perspectives (1998-2013)." Plant and Soil 378(1-2): 1-33.
Berbara, R. L. L. and A. C. García (2014). Humic substances and plant defense metabolism. Physiological Mechanisms and Adaptation Stratégies in Plants Under Changing Environment, Springer: 297-319.
Berg, G. (2009). "Plant-microbe interactions promoting plant growth and health: perspectives for controlled use of microorganisms in agriculture." Applied Microbiology and Biotechnology 84(1): 11-18.
Canellas, L. P., et al. (2011). "Probing the hormonal activity of fractionated molecular humic components in tomato auxin mutants." Annals of Applied Biology 159(2): 202-211.
Cohen, A. C., et al. (2008). "Azospirillum brasilense Sp 245 produces ABA in chemically-defined culture medium and increases ABA content in Arabidopsis plants." Plant growth régulation 54(2): 97-103.
Craigie, J. S. (2011). "Seaweed extract stimuli in plant science and agriculture." Journal of Applied Phycology 23(3): 371-393.
Ertani, A., et al. (2009). "Biostimulant activity of two protein hydrolyzates in the growth and nitrogen metabolism of maize seedlings." Journal of plant nutrition and soil science 172(2): 237-244.
Fan, X., et al. (2006). "Glutamine transport and feedback regulation of nitrate reductase activity in barley roots leads to changes in cytosolic nitrate pools." Journal of Expérimental Botany 57(6): 1333-1340.
Hayat, R., et al. (2010). "Soil beneficial bacteria and their role in plant growth promotion: a review." Annals of Microbiology 60(4): 579-598.
Hong, D. D., et al. (2007). "Seaweeds from Vietnam used for functional food, medicine and biofertilizer." Journal of Applied Phycology 19(6): 817-826.
Khan, W., et al. (2013). "Ascophyllum nodosum Extract and Its Organic Fractions Stimulate Rhizobium Root Nodulation and Growth of Medicago sativa (Alfalfa)." Communications in Soil Science and Plant Analysis 44(5): 900-908.
Khan, W., et al. (2009). "Seaweed extracts as biostimulants of plant growth and development." Journal of Plant Growth Regulation 28(4): 386-399.
Mancuso, S., et al. (2006). "Marine bioactive substances (IPA extract) improve foliar ion uptake and water stress tolerance in potted Vitis vinifera plants." Advances in Horticultural Science 20(2): 156-161.
Marulanda, A., et al. (2009). "Stimulation of plant growth and drought tolerance by native microorganisms (AM fungi and bacteria) from dry environments: mechanisms related to bacterial effectiveness." Journal of Plant Growth Régulation 28(2): 115-124.
Mattner, S. W., et al. (2013). "The effect of kelp extract on seedling establishment of broccoli on contrasting soil types in southern Victoria, Australia." Biological Agriculture & Horticulture 29(4): 258-270.
Milton, R. F. (1952). "Improvements in or relating to horticultural and agricultural fertilizers." British Patent 664989.
Milton, R. F. (1964). Liquid seaweed as a fertilizer. Proc Int Seaweed Symp.
Norrie, J. and J. P. Keathley (2005). Benefits of ascophyllum nodosum marine-plant extract applications to Thompson Seedless grape production. X International Symposium on Plant Bioregulators in Fruit Production 727.
Rayorath, P., et al. (2008). "Rapid bioassays to evaluate the plant growth promoting activity of Ascophyllum nodosum (L.) Le Jol. using a model plant, Arabidopsis thaliana (L.) Heynh." Journal of Applied Phycology 20(4): 423-429.
Rioux, L. E., et al. (2007). "Characterization of polysaccharides extracted from brown seaweeds." Carbohydrate polymers 69(3): 530-537.
Sharma, S. H. S., et al. (2012). "Biostimulant activity of brown seaweed species from Strangford Lough: compositional analyses of polysaccharides and bioassay of extracts using mung bean (Vigno mungo L.) and pak choi (Brassica rapa chinensis L.)." Journal of Applied Phycology 24(5): 1081-1091.
Varanini, Z. and R. Pinton (2000). "Direct versus indirect effects of soil humic substances on plant growth and nutrition." The Rhizosphere. Biochemistry and organic substances at the soilplant interface.(eds. R Pinton: 141-157.
Vessey, J. K. (2003). "Plant growth promoting rhizobacteria as biofertilizers." Plant and Soil 255(2): 571-586.
Zhang, X. and E. H. Ervin (2004). "Cytokinin-containing seaweed and humic acid extracts associated with creeping bentgrass leaf cytokinins and drought resistance." Crop science 44(5): 1737-1745.

## Revendications

1. Biostimulant, **caractérisé en ce qu'**il comporte un extrait obtenu par extraction aqueuse d'au moins une partie de plantes de Roquette, par exemple du genre Eruca (Eruca sativa ; Eruca vesicaria, ...), Diplotaxis (Diplotaxis erucoides, Diplotaxis tenuifolia, Diplotaxis muralis ...), Bunias (Bunias erucago, Bunias orientalis, ...), Erucastrum (Erucastrum nasturtiifolium, Erucastrum incanum...) ou Cakile, pour favoriser le développement végétal ou le développement racinaire.

2. Biostimulant selon la revendication 1, dans lequel l'extrait est obtenu à partir de feuilles de plantes du genre Eruca, Diplotaxis, Bunias, Erucastrum ou Cakile.

3. Biostimulant selon l'une des revendications 1 ou 2, dans lequel l'extrait est obtenu à partir de graines de plantes du genre Eruca, Diplotaxis, Bunias, Erucastrum ou Cakile.

4. Biostimulant selon l'une des revendications 1 à 3, dans lequel l'extrait est obtenu à partir de fleurs de plantes du genre Eruca, Diplotaxis, Bunias, Erucastrum ou Cakile.

5. Biostimulant selon l'une des revendications 1 à 4, dans lequel au moins un ingrédient actif est obtenu par extraction aqueuse.

6. Biostimulant selon l'une des revendications 1 à 5, dans lequel au moins un ingrédient actif est obtenu par extraction de tourteaux ou de pâtes.

7. Biostimulant selon l'une des revendications 1 à 6, dans lequel une composition obtenue à partir de l'extrait d'au moins une partie de plantes de Roquette est formulée sous forme de poudre, de granulés, de granulés dispersibles ou de granulés à diffusion lente.

8. Biostimulant selon l'une des revendications 1 à 7, dans lequel une composition obtenue à partir de l'extrait d'au moins une partie de plantes de Roquette est formulée sous forme de liquide.

9. Utilisation d'un extrait obtenu par extraction aqueuse d'au moins une partie de plantes de Roquette, par exemple du genre Eruca (Eruca sativa ; Eruca vesicaria, ...), Diplotaxis (Diplotaxis erucoides, Diplotaxis tenuifolia, Diplotaxis muralis ...), Bunias (Bunias erucago, Bunias orientalis, ...), Erucastrum (Erucastrum nasturtiifolium, Erucastrum incanum, ...) ou Cakile, pour favoriser le développement végétal ou le développement racinaire.

10. Procédé d'accélération du développement d'une plante, **caractérisé en ce qu'**il comporte l'application sur ladite plante d'une composition obtenue à partir d'un extrait obtenu par extraction aqueuse d'au moins une partie de plantes de Roquette, par exemple du genre Eruca (Eruca sativa ; Eruca vesicaria, ...), Diplotaxis (Diplotaxis erucoides, Diplotaxis tenuifolia, Diplotaxis muralis ...), Bunias (Bunias erucago, Bunias orientalis, ...), Erucastrum (Erucastrum nasturtiifolium, Erucastrum incanum...) ou Cakile.

11. Procédé d'accélération du développement d'une plante selon la revendication 10, dans lequel ledit extrait est obtenu à partir d'au moins une partie de plantes du genre Eruca (Eruca sativa ; Eruca vesicaria, ...), Diplotaxis (Diplotaxis erucoides, Diplotaxis tenuifolia, Diplotaxis muralis ...), Bunias (Bunias erucago, Bunias orientalis, ...), Erucastrum (Erucastrum nasturtiifolium, Erucastrum incanum...) ou Cakile.

12. Procédé selon l'une des revendications 10 ou 11, dans lequel l'application sur la plante se fait par pulvérisation foliaire, arrosage au sol, goutte à goutte, utilisation en cultures hydroponiques.

13. Procédé selon l'une des revendications 10 à 12, dans lequel l'application sur la plante se fait par traitement de semences et/ou enrobage de graines.

14. Procédé selon l'une des revendications 10 à 13, qui comporte une étape (110) de broyage d'au moins une partie de plantes du genre Eruca, Diplotaxis, Bunias, Erucastrum ou Cakile pour fournir un broyat et une étape (115) de filtrage de parties solides dudit broyat pour obtenir un liquide.

15. Procédé selon l'une des revendications 10 à 14, dans laquelle ladite plante est l'une des plantes suivantes :
- tomate,
- laitue,
- concombre,
- blé,
- blé tendre,
- maïs ou
- céréale au sens large.

## Patentansprüche

1. Biostimulans, **dadurch gekennzeichnet, dass** es einen Extrakt umfasst, der per wässerigem Extrakt wenigstens eines Teils von Rucolapflanzen, z. B. von der Art Eruca (Eruca sativa ; Eruca vesicaria, ...), Diplotaxis (Diplotaxis erucoides, Diplotaxis tenuifolia, Diplotaxis muralis ...), Bunias (Bunias erucago, Bunias orientalis, ...), Erucastrum (Erucastrum nasturtiifolium, Erucastrum incanum...) oder Cakile, erhalten ist, um die pflanzliche Entwicklung oder die Wurzelentwicklung zu begünstigen.

2. Biostimulans gemäß Anspruch 1, bei dem der Extrakt aus Pflanzenblättern von der Art Eruca, Diplotaxis, Bunias, Erucastrum oder Cakile erhalten ist.

3. Biostimulans gemäß einem der Ansprüche 1 oder 2, bei dem der Extrakt aus Pflanzensamenkörnern von der Art Eruca, Diplotaxis, Bunias, Erucastrum oder Cakile erhalten ist.

4. Biostimulans gemäß einem der Ansprüche 1 bis 3, bei dem der Extrakt aus Pflanzenblüten der Art Eruca, Diplotaxis, Bunias, Erucastrum oder Cakile erhalten ist.

5. Biostimulans gemäß einem der Ansprüche 1 bis 4, bei dem wenigstens ein aktiver Bestandteil per wässeriger Extraktion erhalten ist.

6. Biostimulans gemäß einem der Ansprüche 1 bis 5, bei dem wenigstens ein aktiver Bestandteil per Extraktion aus Kuchen oder Pasten erhalten ist.

7. Biostimulans gemäß einem der Ansprüche 1 bis 6, bei dem eine Zusammensetzung, die aus dem Extrakt aus wenigstens einem Teil von Rucolapflanzen erhalten ist, in Form von Pulver, Saatkörnern, verstreubaren Saatkörnern oder Saatkörnern mit langsamer Diffusion formuliert ist.

8. Biostimulans gemäß einem der Ansprüche 1 bis 7, bei dem eine Zusammensetzung, die aus dem Extrakt aus wenigstens einem Teil von Rucolapflanzen erhalten ist, in Form von Flüssigkeit formuliert ist.

9. Verwendung eines Extraktes, der per wässeriger Extraktion wenigstens eines Teils von Rucolapflanzen erhalten ist, z. B. von der Art Eruca (Eruca sativa ; Eruca vesicaria, ...), Diplotaxis (Diplotaxis erucoides, Diplotaxis tenuifolia, Diplotaxis muralis ...), Bunias (Bunias erucago, Bunias orientalis, ...), Erucastrum (Erucastrum nasturtiifolium, Erucastrum incanum...) oder Cakile, um die pflanzliche Entwicklung oder die Wurzelentwicklung zu begünstigen, wobei der Extrakt per wässeriger Extraktion, Extraktion per Lösungsmittel oder Extraktion von Öl erhalten ist und / oder in Form von Flüssigkeit formuliert ist.

10. Beschleunigungsverfahren der Entwicklung einer Pflanzen, **dadurch gekennzeichnet, dass** es die Anwendung einer Zusammensetzung auf der genannten Pflanze umfasst, die aus einem Extrakt erhalten ist, der per wässerigem Extrakt wenigstens eines Teils von Rucolapflanzen, z. B. von der Art Eruca (Eruca sativa ; Eruca vesicaria, ...), Diplotaxis (Diplotaxis erucoides, Diplotaxis tenuifolia, Diplotaxis muralis ...), Bunias (Bunias erucago, Bunias orientalis, ...), Erucastrum (Erucastrum nasturtiifolium, Erucastrum incanum...) oder Cakile erhalten ist.

11. Beschleunigungsverfahren der Entwicklung einer Pflanzen gemäß Anspruch 10, bei dem der Extrakt aus wenigstens einem Teil von Pflanzen von der Art Eruca (Eruca sativa; Eruca vesicaria, ...), Diplotaxis (Diplotaxis erucoides, Diplotaxis tenuifolia, Diplotaxis muralis ...), Bunias (Bunias erucago, Bunias orientalis, ...), Erucastrum (Erucastrum nasturtiifolium, Erucastrum incanum...) oder Cakile erhalten ist.

12. Verfahren gemäß einem der Ansprüche 10 oder 11, bei dem die Anwendung auf die Pflanzen per Blattbesprühen, Bewässern des Bodens, Tropfanwendung, Verwendung in Hydroponik erfolgt.

13. Verfahren gemäß einem der Ansprüche 10 oder 12, bei dem die Anwendung auf die Pflanzen per Behandlung von Saatgut und / oder Beschichtung von Saatkörnern erfolgt.

14. Verfahren gemäß einem der Ansprüche 10 bis 13, das einen Schritt (110) zum Zermahlen wenigstens eines Teils von Pflanzen der Art Eruca, Diplotaxis, Bunias, Erucastrum oder Cakile, um ein gemahlenes Produkt zu liefern, und einen Schritt (115) zum Filtern von festen Teilen des genannten gemahlenen Produkts, um eine Flüssigkeit zu erhalten, umfasst.

15. Verfahren gemäß einem der Ansprüche 10 bis 14, bei dem die genannte Pflanze eine der folgenden Pflanzen ist:
- Tomate,
- Blattsalat,
- Gurke,
- Weizen,
- Weichweizen,
- Mais oder
- Getreide im weiteren Sinne.

## Claims

1. Biostimulant, **characterized in that** it comprises an extract obtained by aqueous extraction from at least one part of Rocket plants, for example of the genera *Eruca (Eruca sativa, Eruca vesicaria,* etc), *Diplotaxis (Diplotaxis erucoides, Diplotaxis tenuifolia, Diplotaxis muralis,* etc), *Bunias (Bunias erucago, Bunias orientalis,* etc), *Erucastrum (Erucastrum nasturtiifolium, Erucastrum incanum,* etc) or *Cakile,* in order to promote plant growth or root growth.

2. Biostimulant according to claim 1, wherein the extract is obtained from the leaves of plants from the genus *Eruca, Diplotaxis, Bunias, Erucastrum* or *Cakile.*

3. Biostimulant according to one of claims 1 or 2, wherein the extract is obtained from the seeds of plants from the genus *Eruca, Diplotaxis, Bunias, Erucastrum* or *Cakile.*

4. Biostimulant according to one of claims 1 to 3, wherein the extract is obtained from the flowers of plants from the genus *Eruca, Diplotaxis, Bunias, Erucastrum* or *Cakile.*

5. Biostimulant according to one of claims 1 to 4, wherein at least one active ingredient is obtained by aqueous extraction.

6. Biostimulant according to one of claims 1 to 5, wherein at least one active ingredient is obtained by extraction of oil cakes or pastes.

7. Biostimulant according to one of claims 1 to 6, wherein a composition obtained from the extract from at least one part of Rocket plants is formulated in the form of powder, granules, dispersible granules or slow-diffusion granules.

8. Biostimulant according to one of claims 1 to 7, wherein a composition obtained from the extract from at least one part of Rocket plants is formulated in liquid form.

9. Use of a extract obtained by aqueous extraction from at least one part of Rocket plants, for example of the genera *Eruca (Eruca sativa, Eruca vesicaria,* etc), *Diplotaxis (Diplotaxis erucoides, Diplotaxis tenuifolia, Diplotaxis muralis,* etc), *Bunias (Bunias erucago, Bunias orientalis,* etc), *Erucastrum (Erucastrum nasturtiifolium, Erucastrum incanum,* etc) or *Cakile,* in order to promote plant growth or root growth.

10. Method for speeding up the growth of a plant, **characterized in that** it comprises: the application on said plant of a composition obtained by aqueous extraction from at least one part of Rocket plants, for example of the genera *Eruca (Eruca sativa, Eruca vesicaria,* etc), *Diplotaxis (Diplotaxis erucoides, Diplotaxis tenuifolia, Diplotaxis muralis,* etc), *Bunias (Bunias erucago, Bunias orientalis,* etc), *Erucastrum (Erucastrum nasturtiifolium, Erucastrum incanum,* etc) or *Cakile.*

11. Method for speeding up the growth of a plant according to claim 10, wherein said extract is obtained from at least one part of plants from the genus *Eruca (Eruca sativa, Eruca vesicaria,* etc), *Diplotaxis* (Diplotaxis *erucoides, Diplotaxis tenuifolia, Diplotaxis muralis,* etc), *Bunias (Bunias erucago, Bunias orientalis,* etc), *Erucastrum (Erucastrum nasturtiifolium, Erucastrum incanum,* etc) or *Cakile.*

12. Method according to one of claims 10 or 11, wherein the application on the plant is achieved by foliar spray, watering the soil, drop-by-drop irrigation, use in hydroponics.

13. Method according to one of claims 10 to 12, wherein the application on the plant is achieved by seed treatment and/or seed coating.

14. Method according to one of claims 10 to 13, which comprises a step (110) grinding at least one part of plants from the genus *Eruca, Diplotaxis, Bunias, Erucastrum* or *Cakile* to provide crushed material, and a step (115) of filtering solid portions of said crushed material to obtain a liquid.

15. Method according to one of claims 10 to 14, wherein said plant is one of the following plants:
- tomato;
- lettuce;
- cucumber;
- wheat;
- soft wheat;
- maize; or
- cereal in the broad sense.
